# EUROPÄISCHE PATENTSCHRIFT

(11) **EP 4 340 772 B1**
(45) Veröffentlichungstag und Bekanntmachung des Hinweises auf die Patenterteilung: **12.08.2026**
(21) Anmeldenummer: 22735765.4
(22) Anmeldetag: 18.05.2022
(51) Int. Cl.: A61C 5/00, A61C 7/00, B33Y 80/00

(54) **RETAINER FÜR EINE KIEFERORTHOPÄDISCHE BEHANDLUNG SOWIE VERFAHREN ZUR HERSTELLUNG EINES SOLCHEN RETAINERS**
RETAINER FOR AN ORTHODONTIC TREATMENT AND METHOD FOR PRODUCING A RETAINER OF THIS TYPE
APPAREIL DE CONTENTION CONÇU POUR UN TRAITEMENT ORTHODONTIQUE ET PROCÉDÉ DE PRODUCTION D'UN TEL APPAREIL DE CONTENTION

(30) Priorität: 18.05.2021 DE 102021112795
(43) Veröffentlichungstag der Anmeldung: 27.03.2024
(73) Patentinhaber: Cyron, René, 61381 Friedrichsdorf (DE)
(72) Erfinder: Cyron, René, 61381 Friedrichsdorf (DE)
(74) Vertreter: Rauch, Udo
(86) Internationale Anmeldenummer: PCT/DE2022/100374
(87) Internationale Veröffentlichungsnummer: WO 2022/242800

(56) Entgegenhaltungen:
- EP-A1- 1 449 494
- EP-A2- 1 658 822
- WO-A1-2013/134031
- JP-A- H07 303 662
- US-A- 4 516 938
- US-A1- 2012 028 221

## Beschreibung

Die Erfindung bezieht sich auf einen Retainer für eine kieferorthopädische Behandlung.

Solche Retainer werden nach einer kieferorthopädischen Therapie eingesetzt, um die neupositionierten Zähne zu stabilisieren. Der Retainer wird dazu an die intraorale Seite der Zähne im Frontbereich geklebt.

Retainer weisen in der Regel entweder einen federharten, getwisteten Stahldraht, einen TMA-Draht (Titan-Molybdän-Alloy) oder einen Draht aus einer Nickel-Titanlegierung auf. Sowohl getwistete Stahldrähte als auch Drähte aus Nickel-Titanlegierungen weisen ein hohes Rückstellvermögen auf. Ein derartiger Retainer ist zum Beispiel in der EP 3 563 793 A1 beschrieben. Er verbindet mehrere Zähne miteinander. Dies hat den Nachteil, dass er unter Umständen vollständig entfernt werden muss, oder es komplizierter Reparaturarbeiten bedarf, wenn sich nur die Verklebung mit einem einzigen Zahn gelöst hat oder er gebrochen/beschädigt ist.

Aus der WO 2013/134031 geht ein verbesserter Aufbau einer mit einem Draht versehenen kieferorthopädischen Einrichtung hervor. Zur Entlastung des Drahts und zur besseren Gleichverteilung der Kräfte sind zusätzlich zum Draht zwischen einzelnen Zähnen Verbindungsbalken vorgesehen. Der Aufbau ist sehr kompliziert, und weißt dennoch die vorbeschriebenen Nachteile auf.

Ein weiterer Nachteil von bekannten, einstückigen Retainern ist die Tatsache, dass beim Entfernen des Retainers an allen Zähnen das verwendete Material entfernt werden muss. Dabei kann insbesondere ein für Metall ausgelegter Bohrer bei jedem Materialabtrag eine empfindliche Zahnschädigung hervorrufen und ggf. sogar Zähne unwiderbringlich zerstören. Solche Vorrichtungen, die im Falle eines Defekts komplett ausgetauscht werden müssen, wobei der vorbeschriebene Nachteil entsteht, ist auch aus der US 4 516 938 und der US 2012/0028221 A1 bekannt. Beide zeigen einstückige Vorrichtungen, die nicht im Mund des Patienten repariert werden können.

Ist der Retainer z.B. nur an einer Stelle beschädigt oder gebrochen, oder soll nur der Bereich eines Zahnes oder weniger Zähne überarbeitet bzw. geändert werden, ist es vorteilhaft, wenn der Retainer nicht komplett entfernt werden muss, sondern repariert bzw. teilweise geändert werden kann. Bei dieser Teilreparatur wird das defekte Retainerstück ausgeschnitten und ersetzt.

Aus der JP H07 303 662 A geht ein singulärer zahntechnischer Paarverbinder hervor zum Verbinden eines Paares benachbarter Zähne. Es weist eine Formgedächtnis-Legierung als Material auf. Die Herstellung eines Retainerverbunds ist nicht gezeigt und auch nicht Zielsetzung.

Aus der EP 2 263 597 A2 ist ein Retainer bekannt, der aus mehreren Einzelretainern besteht, die jeweils aus zwei magnetisch miteinander verbundenen Modulen bestehen. Die Module sind mit jeweils einem von den zwei benachbarten Zähnen verklebt. Die gegenseitige Stützung der Zähne wird dabei über die magnetische Haltekraft zwischen den Modulen vermittelt. Diese ist aber nicht immer ausreichend, um die nötige Stabilisierung zu erreichen. Mit anderen Worten kann in zahlreichen Anwendungsfällen das klinische Ziel der Behandlung mit einem solchen Retainer nicht erreicht werden.

Aus EP 1 449 494 A1 geht ein Splint hervor, welcher aus mehreren durch einen Bogen (4) miteinander verbundenen Zacken (2a, 2b, 3a und 3b) besteht. Diese Zacken werden bei der Einsetzung des Splintes (5) in mit Harz gefüllte Rillen (10), die vorher in die Zähne des Patienten gefräst wurden, gesteckt. Der Splint (5) ist - im Gegensatz zum Retainer der vorliegenden Erfindung - nicht für eine flächige Verbindung mit dem Zahn ausgelegt, weshalb eine Zahnverbindung nur mit zusätzlichem Fräsen von Halterillen im Zahn in Frage kommt. Der Splint (5) bildet auch keine Aussparung , welche der Form des Zahnfleischrands folgt.

Die Erfindung beruht somit auf der Aufgabe, einen Retainer zu schaffen, der die Zähne ausreichend stabilisiert und gleichzeitig eine einfachere Reparatur ermöglicht, wenn sich nur einzelne Klebestellen gelöst haben sollten oder der Retainer bzw. das Metall gebrochen ist.

In einem weiteren Aspekt beruht die Erfindung auf der weiteren Aufgabe, einen Retainer bereitzustellen, der selbst bei einem Teilversagen noch alle Zähne im Retainerverbund hält.

Zur Lösung der Aufgabe sieht die Erfindung vor,
dass der Retainer aus mindestens zwei Doppelflügeln besteht, wobei jeder Doppelflügel aus einem Mittelstück und zwei seitlich daran anschließenden Flügeln besteht,
dass die Flügel flächig ausgebildet sind und jeweils eine Vorder- und Rückseite aufweisen, wobei die Vorderseite zur flächigen Verklebung mit der Mantelfläche eines Zahnes ausgeformt ist,
dass das Mittelstück die beiden Flügel fest miteinander verbindet, wobei das Mittelstück (7) mit den beiden Flügeln (8) eine Aussparung bildet, welche der Form des Zahnfleischrands (4) folgt;
wobei der Retainer hergerichtet ist, an zumindest einem nicht-randständigen Zahn zwei Doppelflügel anzuordnen, derart, dass ein erster Doppelflügel eine klebschlüssige Verbindung von einem links-benachbarten Zahn und ein zweiter Doppelflügel eine klebschlüssige Verbindung von einem rechtsbenachbarten Zahn zu dem nicht-randständigen Zahn herzustellen vermag, und
wobei die Doppelflügel (6) hergerichtet sind, eine klebschlüssige Verbindung von dem links-benachbarten und dem rechts-benachbarten Zahn durch den Körper des jeweiligen Doppelflügels (6) hindurch zu dem nicht-randständigen Zahn bereitzustellen, so dass der nicht-randständige Zahn mittels des Retainers von zwei Doppelflügeln stabilisierbar ist.

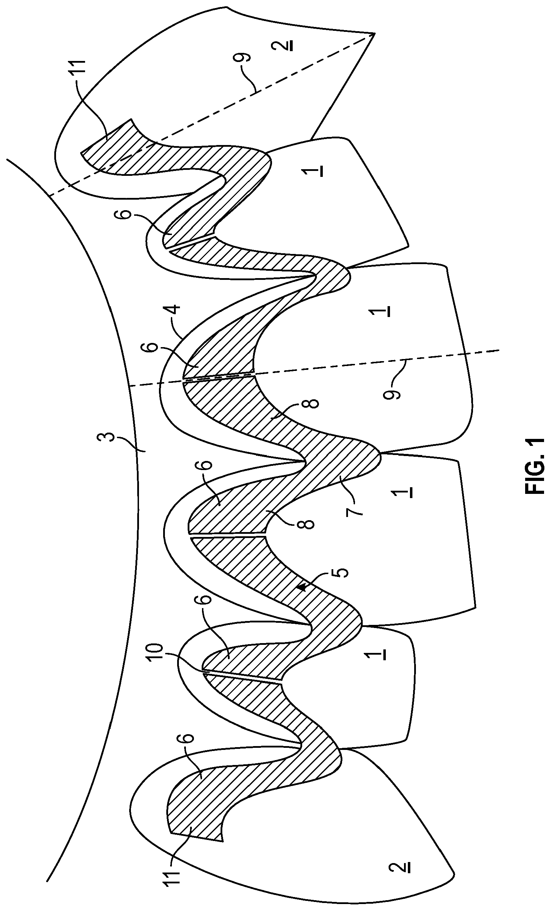

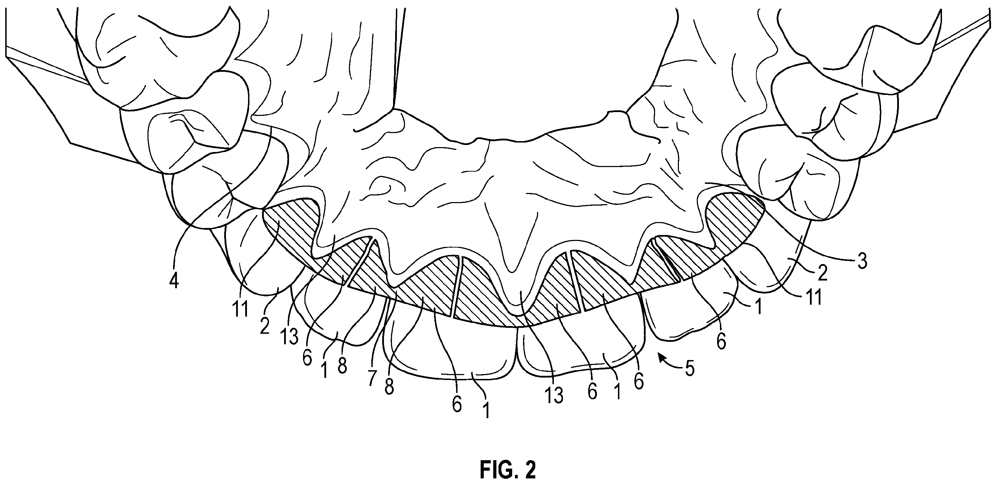

In einem Beispiel bilden Mittelstück und beide Flügel eine Aussparung, welche in besonders bevorzugter Weise der Form des Zahnfleischrands folgt. Beispielsweise wird im Bereich des Mittelstücks eine Lambda-förmige Aussparung gebildet, vgl. Fig. 2. Beispielsweise kann vom Retainer sowohl in der lateralen Ansicht als auch in der axialen Ansicht jeweils ein Bogen geformt sein, dessen Zenit vom Mittelstück gebildet wird, vgl. Fig. 1.

Jeder der Doppelflügel wird zwischen zwei benachbarte Zähne gesetzt, wobei das Mittelstück in den Spalt zwischen den Zähnen zu liegen kommt und die Flügel sich mit ihren Vorderseiten an die Flanken der Zähne anlegen, wo sie mit diesen verklebt werden. Die Bogenform der axialen Ansicht entspricht also dem Querschnitt von zwei benachbarten Zähnen, wobei der Zenit des Bogens dem Spalt zwischen den beiden Zähnen entspricht und die Flügel der intraoralen Kontur der Zähne folgen.

An jedem nicht-randständigen Zahn, der vom Retainer überspannt werden soll, kommen bevorzugt je zwei Doppelflügel zur Anlage. Das heißt an einem nicht-randständigen Zahn sind, beispielsweise auf seiner rückseitigen Zahnflanke, zwei Doppelflügel befestigt, zum Beispiel angeklebt. So kann ein erster dort befestigter Doppelflügel diesen nicht-randständigen Zahn mit seinem linken Nachbar verbinden und ein zweiter dort befestigter Doppelflügel diesen nicht-randständigen Zahn mit seinem rechten Nachbar verbinden. An jedem randständigen Zahn, der ein jeweiliges Endstück des vom Retainer überspannten Bereichs markiert, kommt typischerweise nur ein Doppelflügel zur Anlage, denn dort ist nur ein Doppelflügel befestigt, der nur mit einem Nachbarzahn des randständigen Zahns verbunden ist. Ein mit einem randständigen Zahn zu verbindender Doppelflügel kann sich dahingehend unterscheiden, dass am randständigen Zahn die gesamte Zahnflanke für die Anlage des einzigen Doppelflügels nutzbar ist, da die Anlagefläche nicht mit einem zweiten dort zu befestigenden Doppelflügel zu teilen ist.

In einem Beispiel kann der Retainer den Bereich von einem ersten Eckzahn über die Schneidezähne bis zu einem zweiten Eckzahn eines Kiefers überspannen. In diesem Beispiel sind die Eckzähne die randständigen Zähne, denen jeweils nur ein Doppelflügel zugeordnet ist, und die Schneidezähne die nicht-randständigen Zähne, denen jeweils zwei Doppelflügel zugeordnet sind.

Wegen der auf die laterale Ansicht bezogenen Bogenform kann das Mittelstück ungefähr in halber Höhe der Zahnkrone aufgesetzt werden, wobei die Flügel dem Zahnfleischrand folgend zum unteren Ende des Zahnes bis zu dessen Sagittalebene geführt werden. Damit erfolgt eine Abstützung des Retainers nahe der Zahnbasis, was eine definierte Stabilisierung der Zähne begünstigt. Der Retainer befindet sich somit nahe am "Center of Resistance" des Zahnes.

Die Doppelflügel werden mit den Zahnflanken flächig verklebt und halten die Zähne in Position, indem diese sich mittels der Doppelflügel gegenseitig stützen. Durch die flächige Verbindung wird ein Kippen der Zähne relativ zueinander erschwert, was die Stabilisierung deutlich verbessert.

Mit anderen Worten ist jeder Doppelflügel mit je einer Zahnflanke zweier benachbarter Zähne flächig verklebt. Ein Doppelflügel stellt demnach eine klebschlüssige Verbindung von der Zahnflanke eines ersten Zahns durch den Körper des Doppelflügels hindurch zur Zahnflanke eines zweiten, zum ersten Zahn benachbart angeordneten Zahns bereit. Bevorzugt ist dabei die klebschlüssige Verbindung auf die räumliche Erstreckung der zwei benachbarten Zähne begrenzt. Dies hat den weiteren Vorteil, dass falls eine Klebverbindung verloren geht, hiervon nur ein Doppelflügel betroffen ist und der zweite Doppelflügel, der an demselben Zahn befestigt ist, den betroffenen Zahn nach wie vor stabilisieren kann. Mit anderen Worten stabilisiert der zum defekten Flügel benachbarte Flügel den betroffenen Zahn weiter. Da jeder nicht-randständige Zahn daher also typischerweise mehr als eine Klebverbindung aufweist, ist eine Redundanz geschaffen, die bei einem Defekt des Retainers dessen Funktion bzw. Wirkung weiter aufrechtzuerhalten vermag. Möglicherweise kann die Wirkung geringer oder eingeschränkt sein gegenüber einem voll funktionsfähigen Retainer ohne Defekt, aber der betroffene Zahn fällt nicht vollständig aus dem Retainerverbund heraus. Dies steht daher im Unterschied zu einteiligen Retainern, bei denen der Defekt einer Klebeverbindung gleichzeitig den Verlust des Zahnes aus dem Retainerverbund bedeutet und der betroffene Zahn sich, insbesondere gegenüber den übrigen Zähnen des Retainerverbunds, verschieben kann.

Des Weiteren sind bevorzugt an einer Zahnflanke eines nicht randständigen Zahns jeweils zwei Doppelflügel befestigt, so dass ein erster Doppelflügel eine klebschlüssige Verbindung von einem links-benachbarten Zahn zu dem Zahn herstellt und ein zweiter Doppelflügel eine klebschlüssige Verbindung von einem rechtsbenachbarten Zahn zu dem Zahn herstellt. Vom ersten Doppelflügel zum zweiten Doppelflügel ist hingegen keine kraftschlüssige Verbindung vorgesehen bzw. eine kraftschlüssige Verbindung bewusst vermieden bzw. durchbrochen. Eine solche durchgehende kraftschlüssige Verbindung von einem ersten Doppelflügel zum zweiten Doppelflügel ist nicht notwendig, da die Klebverbindung die beiden Doppelflügel ausreichend fest mit dem Zahn verbindet und ein Kraftfluss somit über die Klebverbindungen und den Zahn selbst geführt werden kann. Das Weglassen der kraftschlüssigen durchgängigen Verbindung zwischen den Doppelflügeln ist daher für die Stabilisierung der Zähne in vorteilhafter Weise nicht nachteilig, ermöglicht aber andererseits die mit dieser Beschreibung vorgestellten Vorteile.

Um eine noch bessere Stabilisierung zu erhalten, kann vorgesehen werden, dass die Flügel zu ihren freien Enden hin verbreitert ausgeführt sind.

Typischerweise sind die freien Enden der Flügel voneinander separiert. Dies ermöglicht die beabsichtigte leichte Reparatur einzelner Doppelflügel.

Um die Produktion zu vereinfachen, wäre aber auch eine kettenartige Struktur denkbar, wobei die freien Enden der Flügel von zwei benachbarten Doppelflügeln miteinander beispielsweise trennbar verbunden sind. Hier ist es gegebenenfalls notwendig, bei dem Ersatz eines Doppelflügels, zunächst seine Verbindung zu den benachbarten Doppelflügeln zu trennen. Der herausgetrennte Doppelflügel kann dann erneut verklebt werden, ohne ihn mit den benachbarten Doppelflügeln erneut zu verbinden, da jeder einzelne Doppelflügel für sich die Stabilisierung der mit ihm verbundenen Zähne zu bewirken vermag.

Zusätzlich zur Verklebung der einzelnen Doppelflügel kann eine Spange vorgesehen werden, die sich an mehreren Doppelflügeln abstützt. Dazu sieht die Erfindung vor, dass an der Rückseite der Doppelflügel Mittel vorhanden sind, um eine mehrere Doppelflügel verbindende Spange zu befestigen.

Typischerweise werden die Doppelflügel aus Metall oder einer Metalllegierung hergestellt, um die benötige Stabilität zu erreichen. Es können für die Herstellung des erfindungsgemäßen Retainers aber auch weitere Materialien Verwendung finden, wie in überzeugender Weise herausgefunden wurde. Neben verschiedenen Kunststoffen und Kunststoff-Keramik-Kompositen konnte im Rahmen der Erfindungslegung auch mit dem Material Polyetheretherketon (PEEK) Erfahrung gesammelt werden, welches sehr gute Eigenschaften für die Herstellung des erfindungsgemäßen Retainers mit sich bringt. Besonders vorteilhaft ist es, wenn sich das Material gut kleben lässt und eine inerte Flexibilität bereitstellt, um dynamische kleinste Veränderungen der Zahnstellung tolerieren zu können. Hier erweist sich neben einer Kunststoff-Keramik-Mischung auch PEEK als sehr brauchbar. PEEK ist darüber hinaus in verschiedenen Farben wie beispielsweise Zahnweiss erhältlich. Die vorgenannten Materialien können in additiver Herstellung (3D-Druck) oder in einem Fräsverfahren eingesetzt werden, um den erfindungsgemäßen Retainer bereitzustellen.

Materialien wie Kunststoff-Keramik-Mischung oder PEEK bieten den weiteren Vorteil, dass im Falle eines Abtrags von möglichen Materialresten des Retainers - der im Falle der vorliegenden Beschreibung ohnehin nur an beispielsweise zwei Zähnen durchgeführt werden müsste - auch mit einem Bohrer für Kunststoffe gearbeitet werden kann, da kein Metall abzutragen ist. Ein für Kunststoff ausgelegter Bohrer schädigt die Zahnoberflächen dabei erheblich weniger als ein Bohrer für Metalle bzw. Metalllegierungen, so dass nicht nur weniger Zähne geschädigt werden, sondern diese Zähne selbst auch weniger geschädigt werden müssten, wenn es zu einem Haftungsverlust eines Retainerstücks oder dgl. kommen sollte.

Die Retainer werden vorzugsweise in einem 3D-Verfahren, wie beispielsweise 3D-Druck oder 3D-Fräsung, hergestellt. Dazu kann die Erfindung vorsehen, dass ein elektronisches 3D-Bild der intraoralen Kontur der zu stützenden Zähne erzeugt wird, dass aus dem 3D-Bild beispielsweise eine Druck- oder Fräsvorlage für einen 3D-Drucker oder eine 3D-Fräse berechnet wird und/oder dass der Retainer, insbesondere mittels eines 3D-Druckers oder einer 3D-Fräse unter Verwendung der berechneten Druck- oder Fräsvorlage, produziert wird.

Der Vorteil bei dieser Vorgehensweise ist, dass in den einzelnen Zahnarztpraxen lediglich ein elektronisches 3D-Bild erstellt werden muss, das dann an eine Zentrale weitergeleitet werden kann, die über ein Herstellungsgerät wie einen 3D-Drucker oder eine 3D-Fräse verfügt, um aus dem elektronischen 3D-Bild einen individuell angepassten Retainer herzustellen.

Das elektronische Bild kann durch ein Scannen der Zähne selbst erzeugt werden. Denkbar wäre aber auch, dass zunächst ein Zahnabdruck erstellt wird und der Scan an einem daraus erstellten Modell ausgeführt wird.

Die Doppelflügel des Retainers können einzeln hergestellt werden, was derzeit bevorzugt ist. Denkbar wäre aber auch, sie jedenfalls im Rahmen eines Retainer-Herstellungsprozesses als Doppelflügelverbund herzustellen, zunächst also beispielsweise in einer einzigen kettenförmigen Struktur, also in einem Stück herzustellen. Dabei sind die Doppelflügel des Retainers voneinander trennbar ausgeführt, um die Vorteile der Erfindung zu realisieren. Insbesondere führt die Trennbarkeit der Doppelflügel zu einer veränderten Geometrie und Form des Retainers und gegenüber eines geänderten Kraftflusses durch den Retainer. Im Anschluss an den Retainer-Herstellungsprozess können die Doppelflügel voneinander getrennt werden, falls dies notwendig erscheinen sollte; ein solcher lösbarer Verbund der Doppelflügel zueinander, in Art einer Sollbruchstelle, kann ggf. aber auch in einer Einsatzposition des Retainers im Mundraum eines Anwenders aufrecht erhalten bleiben. Dies kann das Einsetzen des Retainers vereinfachen ohne die besondere Funktionalität des mehrteiligen Retainers zu beeinträchtigen.

Mit anderen Worten handelt es sich bei jedem der Doppelflügel somit um ein separates, von den weiteren Doppelflügeln getrenntes und eigenständiges Bauteil. Dies schließt nicht aus, dass ein Doppelflügel des Retainers mit benachbarten Doppelflügeln temporär, d.h. heraustrennbar oder lösbar verbunden sein kann, so dass die Verbindung zwischen zwei Retainern auf einfache Weise, insbesondere an einer vordefinierten bzw. vorbereiteten Stelle, gelöst werden kann, ohne die Funktion und Stützkraft der Doppelflügel zu beeinträchtigen. Auch die Vorrüstung mit einer lösbaren, vorkonstruierten Verbindungsstelle (Soll-Bruchstelle) ermöglicht das Abtrennen eines Doppelflügels aus einem Verbund von Doppelflügeln im Falle eines Austausches oder Reparatur dieses Doppelflügels ohne Beeinträchtigung der benachbarten Doppelflügel und ohne insgesamt die Stützfunktion des Retainers zu beeinflussen. Als Beispiel sei erwähnt, dass die besondere Funktionalität des mehrteiligen Retainers ermöglicht, dass alle Zähne des Retainerverbunds nach wie vor gestützt sind, selbst wenn der Retainer an einer Stelle, oder sogar an mehreren Stellen, beschädigt oder gebrochen ist. Dies vermag ein einstückiger Retainer nicht zu leisten, und diese Funktion bleibt vorhanden unabhängig davon, ob der Retainer zunächst als lösbarer Verbund von Doppelflügeln hergestellt oder in den Mundraum eingesetzt wird. Damit unterscheidet sich auch eine zunächst kettenartig verbundene Form des mehrteiligen Retainers von einem einstückigen Retainer bekannter Bauart.

Dabei könnten in einem einfach Beispiel die Übergänge zwischen zwei Doppelflügeln dünner ausgeführt werden, so dass sich eine Art Soll-Bruchstelle ergibt. Dies erleichtert die Heraustrennung eines einzelnen Doppelflügels aus einem applizierten Retainer, wenn jener ersetzt oder neu verklebt werden muss.

In einer Einsatzposition des Retainers, also insbesondere im Mundraum eines Patienten, wirkt dabei jeder Doppelflügel als eigenständiges, separates Bauteil des Retainers, und zwar unabhängig davon, ob ein Doppelflügel ggf. mit dem benachbarten Doppelflügel temporär bzw. lösbar verbunden ist, oder ob die einzelnen Doppelflügel bereits von Anfang an als separate Bauteile in die Einsatzposition eingesetzt werden. Selbst dann, wenn die einzelnen Doppelflügel daher heraustrennbar oder lösbar in der Einsatzposition miteinander verbunden sind, wirkt jeder Doppelflügel als getrenntes Bauteil einer Mehrzahl solcherart getrennter Bauteile, so dass der Retainer als mehrteiliges Element aufzufassen ist und beispielsweise keine kraftschlüssige Verbindung von einem Doppelflügel durch die lösbar ausgestaltete Verbindung zum benachbarten Doppelflügel hindurch vorgehalten wird. Vielmehr ist die Verbindung von einem Doppelflügel zum benachbarten Doppelflügel bewusst lösbar bzw. heraustrennbar gestaltet, so dass es sich beim Retainer als Gesamtprodukt in der Einsatzposition gerade nicht um eine einteilige Konstruktion handelt, welche beispielsweise über einen stoffschlüssigen Verbund auch eine Kraftweiterleitung durchführt, sondern die Konstruktion weist gegenüber einer einteiligen Konstruktion die vor- bzw. nachgenannten konstruktiven Unterschiede auf gerade um eine Trennung eines Doppelflügels aus dem Retainer in der Einsatzposition zu ermöglichen.

Ein Einzelaustausch eines Doppelflügels kann auch in dem Fall vorteilhaft sein, wenn eine Anpassung der Kraftbeaufschlagung auf einzelne Zahnbereiche erfolgen soll, davon aber der übrige Kieferbereich nicht beeinflusst werden soll. Dann kann es sogar gegenüber einem durchgehenden Retainer vorteilhaft sein, dass nur eine lokale Veränderung des Kraftflusses, nämlich begrenzt auf sogar nur ein bis zwei Zähne, erfolgen kann, ohne die übrigen Zähne zu verändern. Bei einem durchgehenden, einstückigen Retainer ist dies so nicht möglich, da dort stets der gesamte Retainer auszuwechseln ist und somit bei Neujustierung des Retainers stets der gesamte Kiefer neu geprüft und angepasst werden muss. Mit anderen Worten ermöglicht die Erfindung auch die lokale, d.h. kleinräumige Veränderung der Kraftbeaufschlagung bzw. Stützung auf die von einem Doppelflügel gehaltenen Zähne, ohne dass der gesamte Retainerverbund neu auszurichten ist.

Noch ein weiterer Vorteil der mit der vorliegenden Beschreibung vorgestellten Retainers ergibt sich darin, dass sich dieser sehr dünn herstellen lässt, insbesondere so dünn, dass keine oder kaum eine Störung des Bewegungsraums des gegenüberliegenden Kiefers auftritt. Dies kann erreicht werden durch verschiedene Weiterbildungen des hier vorgestellten Retainers, insbesondere durch die Ausformung der Flügel, die jeweils eine große Zahnklebefläche bereitstellen, und das Ausformen des Mittelstücks, welches in den

Zahnzwischenraum hineinragt und deshalb unschädlicherweise dicker ausgestaltet werden kann als die Flüge, ohne dass es in den Bewegungsraum des gegenüberliegenden Kiefers tritt.

Beispielsweise kann der Retainer im Bereich der Flügel eine Dicke von 0,75 mm oder weniger, bevorzugt von 0,5 mm oder weniger, weiter bevorzugt von 0,3 mm oder weniger, oder sogar nur von 0,2 mm oder weniger aufweisen. Dabei ist es bevorzugt, je nach Material eine Mindestdicke von 0,1 mm oder mehr, bevorzugt von 0,15 mm oder mehr, oder auch von 0,25 mm oder mehr im Bereich der Flügel bereitzustellen, um ein Reißen oder Beschädigungen beim Einsetzen des Retainers zu vermeiden. Das Mittelstück kann dann, beispielsweise keilförmig, in den Zahnzwischenraum hineinragen und beispielsweise eine Dicke von um 1 mm ± 0,3 mm aufweisen. Das Mittelstück kann in einer bevorzugten Ausführungsform auch eine Dicke von um 0,5 mm ± 0,3 mm aufweisen.

In manchen kieferorthopädischen Behandlungsfällen liegt ein "tiefer Biss" vor, mit dem zuweilen eine hohe Rezidivwahrscheinlichkeit einhergehen kann. Um diesem Rezidiv des tiefen Bisses, ggf. sogar zusätzlich zu einer andersartigen Zahnverschiebung wie z.B. einem Drehen der Zähne, vorzubeugen, ist es eine Möglichkeit, einen hier im Weiteren vorgestellten Aufbiss vorzusehen. Ein solcher Aufbiss kann mit den in der vorliegenden Beschreibung gezeigten Ausgestaltungen kombinierbar ausgestaltet werden.

Durch das Vorsehen eines Aufbisses kann eine Verschiebung der Zähne verhindert werden. Beispielsweise kann eine Elongation der Frontzähne, durch die Abstützung der Unterkieferfront- und/oder -eckzähne auf einem oder mehrerer der Aufbisse verhindert werden. Schließlich kann ein solcher Aufbiss oder Bisserhöhung auch für eine therapeutisch gewünschte Bisserhöhung genutzt werden.

Zur Vorsehung eines Aufbisses ist eine Auflageseite zum Auflegen der gegenüberliegenden Zähne vorgesehen. Wenn, wie typischerweise vorgesehen, der Retainer auf den Zahnrückseiten angeordnet werden soll, wird der Aufbiss an einem Retainer des Oberkiefers angeordnet, da typischerweise die Zähne des Unterkiefers an den Rückseiten der Zähne des Oberkiefers zur Anlage kommen und dort auf einfache Weise der Aufbiss bereitgestellt werden kann.

Ein Doppelflügel gemäß der vorliegenden Beschreibung kann zumindest einen, bevorzugt zwei Aufbisse umfassen. Insbesondere können an jedem nicht-randständigen Zahn je zwei Aufbisse vorgesehen sein, an einem randständigen Zahn kann ferner ein Aufbiss vorgesehen sein. Dabei können die Aufbisse so gestaltet sein, dass sich die je zwei an einer Zahnflanke gemeinsam angeordneten Aufbisse als gemeinsamer Aufbiss in funktioneller oder optischer Hinsicht darstellen. Ein eventuell zwischen dem gemeinsamen Aufbiss, also zwischen den zwei an einer Zahnflanke angeordneten "Halbaufbissen", vorhandener Spalt erweist sich dabei in funktioneller Hinsicht als unschädlich.

Im Folgenden soll anhand von Ausführungsbeispielen und unter Bezugnahme auf die Figuren die Erfindung näher erläutert werden. Hierbei weisen ähnliche oder gleiche Elemente teilweise dieselben Bezugszeichen auf, die Merkmale der verschiedenen Ausführungsbeispiele können miteinander kombiniert werden.

### Kurzbeschreibung der Figuren

Es zeigen:
- Fig. 1: eine Aufsicht auf eine Kieferpartie mit eingesetztem Retainer,
- Fig. 2: eine computersimulierte Darstellung eines Retainers gemäß der Erfindung,
- Fig. 3: eine Ausführungsform eines Retainers mit Aufbissen,
- Fig. 3A: eine Seitenansicht eines Schneidezahns mit angesetztem Retainer mit Aufbiss,
- Fig. 3B: eine weitere Ansicht eines Zahns mit angesetztem Retainer mit Aufbiss.

### Detaillierte Beschreibung der Erfindung

Figur 1 zeigt hierzu eine laterale Ansicht, also die intraorale Seite einer oberen Schneidezahnreihe, an der ein erfindungsgemäßer Retainer befestigt ist.

Dargestellt sind vier Schneidezähne 1 und zwei Eckzähne 2 in der lateralen Ansicht. Diese ragen aus dem Zahnfleisch 3 hervor, wobei der Verlauf des Zahnfleischrandes 4 entlang des Zahnes in Form einer Zykloide verläuft, deren Spitzen nach oben zeigen.

Der Retainer 5 besteht typischerweise aus mehreren Doppelflügeln 6, wobei diese jeweils aus einem Mittelstück 7 mit zwei davon abstehenden Flügeln 8 bestehen. Zu jedem nicht-randständigen Schneidezahn 1 sind hierbei je zwei Doppelflügel 6 zugeordnet, zu den randständigen Eckzähnen 2 ist jeweils ein Doppelflügel 6 zugeordnet.

Wie aus der in der Figur 1 dargestellten lateralen Ansicht der Doppelflügel 6 hervorgeht, bilden diese in einer vertikalen Ebene jeweils einen Lambda-förmigen Bogen, wobei das Mittelstück 7 den Zenit des Bogens und die Flügel 8 dessen abfallende Endabschnitte bilden.

Gemäß einer nicht dargestellten axialen Ansicht (Sicht von oben auf den Zahn) auf die Doppelflügel haben diese in einer horizontalen Ebene ebenfalls eine Lambda-förmigen Bogenform. Diese Form erlaubt es, dass das Mittelstück 7 in etwa auf halber Höhe der Zahnkrone zwischen zwei Schneidezähne 1, 1 oder einen Schneide- und einen Eckzahn 1, 2 gesetzt werden kann, wo es möglichst weit und spitz in den Spalt zwischen den jeweiligen Zähnen eintaucht. Die beiden Flügel 8 folgen dem Zahnfleischrand 4 und enden etwa in der Sagittalebene 9 (Ebene eines Zahnes quer zur Zahnreihe) eines Zahnes 1, 2.

Die beiden Flügel 8 und das Mittelstück 7 werden mit den Zähnen verklebt. Dazu sind die Flügel 8 flächig ausgebildet, so dass ihre den Zähnen 1, 2 zugewandten Vorderseiten eine große Klebefläche bilden. Mit anderen Worten wird je ein Flügel 8 mit je einem Zahn 1, 2 verklebt, so dass von einem ersten Zahn 2 über den Flügel 8 des Doppelflügels 6 und über den weiteren Flügel 8 hin zu einem zweiten Zahn 1 eine klebschlüssige Verbindung hergestellt ist. Eine stoffschlüssige Verbindung von einem ersten Doppelflügel 6 in einen zweiten Doppelflügel 6 zur Realisierung einer kraft- oder formschlüssigen Verbindung hat sich als nicht notwendig herausgestellt und kann somit in vorteilhafter Weise entfallen. Vielmehr erfolgt der Kraftfluss bzw. die Stützung des Kiefers insgesamt über die Zahnflanken selbst und nicht durch einen durchgehenden Retainer hindurch. Mit der vorliegenden Neukonstruktion eines Retainers 5 ist auch eine Umleitung des Kraftflusses durch die Zahnflanken hindurch realisiert, was dazu beiträgt, dass es ermöglicht ist, einen trennbaren Retainer 5 in der hier beschriebenen Art bereitzustellen, bei welchem in vorteilhafter Weise Einzelkomponenten im Bedarfsfall ausgetauscht werden können.

Die jeweils benachbarten Enden der Flügel 8 gehen ineinander über oder können durch einen kleinen Spalt 10 getrennt sein. Denkbar wäre aber auch, die Doppelflügel 6 miteinander verbunden auszuführen und die Verbindung mit einer Soll-Bruchstelle auszugestalten.

Die Flügelenden 11 der im Retainer außenliegenden Doppelflügel sind verlängert, so dass sie sich über die Sagittalebene 9 des Zahnes hinaus erstrecken und sich um den Zahn, im hier gezeigten Ausführungsbeispiel die beiden Eckzähne 2, herumlegen.

Zur Herstellung eines Retainers wird ein elektronisches Bild der intraoralen Seite der Zahnreihenkontur aufgenommen und dieses verwendet, um mittels eines 3D-Druckers bzw. einer 3D-Fräse einen individuell angepassten Retainer herzustellen, das heißt zum Beispiel zu drucken oder zu fräsen. Der Retainer kann dann als Ganzes oder zu Doppelflügeln vereinzelnd an die Rückseite der Zähne angesetzt und dort verklebt werden. Wenn der Oberkiefer einen Retainer erhalten soll, wird auch die Zahnreihe des Unterkiefers gescannt. So können mögliche Zahnkontakte durch die Gegenkieferzähne/Antagonisten mit dem Retainer vermieden werden.

Sollte sich im Laufe der Zeit eine Verklebung lösen, so kann die Verklebung erneuert werden, ohne dass der gesamte Retainer von der Zahnreihe gelöst werden muss. Der betroffene Doppelflügel kann ggf. einzeln neu hergestellt werden, wenn dieser beschädigt oder verloren ist, und in den Retainerverbund eingesetzt werden.

Figur 2 zeigt eine weitere Darstellung eines erfindungsgemäßen Retainers 5 in der eingesetzten Position an einem Kiefer, wobei die innere Kontur des Retainers 5 dem Verlauf des Zahnfleischrands 4 folgt. Im Unterschied zu der mit Figur 2 gezeigten Ausführungsform sind die Flügel 8 deutlich vergrößert, so dass diese an der Zahnflanke eine deutlich vergrößerte Klebfläche bilden. Die vergrößerte Klebfläche kann die Klebefestigkeit auf dem jeweiligen Zahn erhöhen. Dies ermöglicht ggf. außerdem einen dünneren Aufbau des Retainers 5, der sich dadurch weiter angenehmer tragen lässt, da der Bewegungsraum des gegenüberliegenden Kiefers (nicht dargestellt) nicht oder nur weniger beeinträchtigt wird. Der flachere Aufbau ermöglicht darüber hinaus eine Vereinfachung der Zahnhygiene, da weniger Aufbauraum benötigt wird, in welchem sich Speisereste sammeln könnten. Die dem Zahnfleischrand 4 gegenüberliegende Seite der Flügel 8 ist in dieser Ausführungsform als gerade geschnittene Linie gezeigt. Zur weiteren Vergrößerung der Klebfläche der Flügel ist auch eine weitere Verbreiterung der Flügel 8 in Richtung Zahnspitzen denkbar. Somit könnten die in Figur 2 in Art einer "halben Sanduhr" dargestellten Doppelflügel 6 auch eine "ganze Sanduhr" bilden, indem die Flügel 8 achsgespiegelt vergrößert werden.

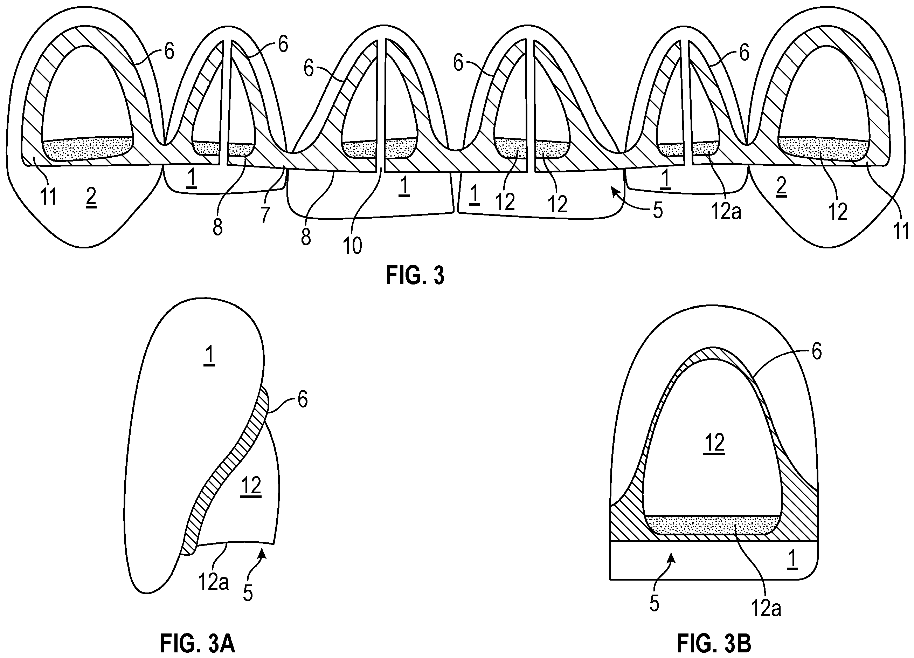

Mit Bezug auf die Figuren 3, 3A und 3B ist die Gestaltung des Retainers 5 mit Aufbiss 12 gezeigt. Fig. 3 zeigt hierzu eine schematische Darstellung einer Kieferfrontalpartie mit den vier Schneidezähnen und zwei Eckzähnen und angesetztem Retainer 5, wobei der Retainer 5 aus der Mehrzahl von Doppelflügeln 6 aufgebaut ist, welche nicht mit dem jeweils benachbarten Doppelflügel 6 verbunden sind und somit insgesamt keinen durchgehenden oder gar einstückigen Retainer 5 bilden. Vielmehr weist der Retainer 5 in der gezeigten Form eine Mehrzahl von Einzelkomponenten in Form der Doppelflügel 6 auf. Jeder Doppelflügel 6 weist wie in der zuvor beschriebenen Ausführungsform ein Mittelstück 7 sowie je zwei Flügel 8 auf und ist so angeordnet, dass ein jeder Doppelflügel 6 jeweils zwei Zähne 1, 2 miteinander verbindet. Durch die Aneinanderreihung der Mehrzahl von Doppelflügeln 6 werden somit sukzessive die Zähne miteinander verbunden und somit die Haltewirkung erzielt so wie es bei einem durchgehenden Retainer 5 der Fall wäre.

An jedem nicht-randständigen Zahn 1, hier die Schneidezähne 1, ist je ein Spalt 10 ersichtlich der deutlich einen linken Doppelflügel von einem rechten Doppelflügel trennt. Sollte sich ein einzelner der Mehrzahl von Doppelflügeln 5 lösen oder aus anderweitigem Grund ausgetauscht werden sollen, so ist das einfach möglich, ohne dabei den ganzen Retainer austauschen zu müssen.

Der Retainer 5 stellt eine Bisserhöhung bereit, indem jeder Doppelflügel 6 mit zwei Aufbissen 12 ausgerüstet ist. An den Aufbissen 12 können die Zähne des gegenüberliegenden Kiefers (nicht dargestellt) an den Anlageflächen 12a zur Anlage kommen, so dass die Höhe des Bisses mittels des mit Aufbissen 12 ausgerüsteten Retainers einstellbar ist. Die Aufbisse 12 sind dabei an den jeweiligen Zahnflanken paarweise angeordnet, das heißt ein erster Aufbiss 12 eines linken Doppelflügels 5 und ein zweiter Aufbiss 12 eines rechten Doppelflügels 5 ist an derselben Zahnflanke angeordnet und beispielsweise von dem Spalt 10 voneinander beabstandet.

Der Retainer 5 nach dieser Ausführungsform kann also die Doppelfunktion bereitstellen einerseits dem Kiefer einen Halt zu bieten bzw. therapeutisch in die Zahnstellung einzugreifen und zweitens eine Einstellung der Bisshöhe für den Anwender bereitzustellen. Dennoch ist auch mit dieser Ausführungsform des Retainers 5 ein Austausch jeweils eines einzelnen Doppelflügels 6 ermöglicht, so dass bei Ausfall eines Doppelflügels 6 - oder zu jedem anderen Zweck, bei dem ein Doppelflügel 6 auszutauschen wäre - ein einzelner Doppelflügel 6 entnehmbar oder austauschbar, ohne dass der gesamte Retainer 5 auszutauschen ist. Bei Verlust eines Teilstücks 6 des Retainers 5 sind dennoch alle Zähne 1, 2 nach wie vor durch die übrigen Doppelflügel 6 stabilisiert.

Mit Bezug auf Fig. 3A ist eine Seitenansicht auf einen Schneidezahn 1 mit angesetztem Retainer 5 mit Aufbiss 12 dargestellt. Die Bisshöhe kann mittels Gestaltung der Auflagefläche 12a eingestellt werden. Mit Bezug auf Fig. 3B ist noch eine weitere Darstellung einer Seitenfläche eines Zahns 1 gezeigt, bei welchem der Aufbiss 12 durchgängig dargestellt ist. Ein solcher Aufbiss 12 des Retainers 5 kann beispielsweise dennoch funktionell aus zwei Einzelteilen bestehen, jedoch temporär bzw. lösbar miteinander verbunden sein, um ein Eindringen von Speiseresten in den Zwischenraum 10 zu unterbinden. Beispielsweise kann die mit Fig. 4 gezeigte Form bereits dadurch entstehen, dass die beiden an einem Zahn 1 angesetzten Doppelflügel 6 so dicht aneinandergesetzt werden, dass der Spalt 10 verschwindend gering wird. Dies beeinträchtigt die erfinderische Zusatzwirkung nicht, dass ein einzelner Doppelflügel 6 weiterhin als Einzelteil ausgetauscht werden kann, ohne dass der ganze Retainer 5 auszutauschen wäre.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, der Umfang der Erfindung wird durch die Ansprüche bestimmt.

In allen Figuren stellen gleiche Bezugszeichen gleiche Gegenstände dar, so dass Beschreibungen von Gegenständen, die gegebenenfalls nur in einer oder jedenfalls nicht hinsichtlich aller Figuren erwähnt sind, auch auf diese Figuren übertragen werden können, hinsichtlich welchem der Gegenstand in der Beschreibung nicht explizit beschrieben ist.

### Bezugszeichenliste

- 1: Schneidezähne
- 2: Eckzähne
- 3: Zahnfleisch
- 4: Zahnfleischrand
- 5: Retainer

- 6: Doppelflügel
- 7: Mittelstück
- 8: Flügel
- 9: Sagittalebene
- 10: Spalt
- 11: Flügelende, Endflügel
- 12: Aufbiss
- 12a: Auflagefläche

## Patentansprüche

1. Retainer für eine kieferorthopädische Behandlung, welcher aus mindestens zwei Doppelflügeln (6) besteht,
wobei jeder Doppelflügel (6) aus einem Mittelstück (7) und zwei seitlich daran anschließenden Flügeln (8) besteht,
wobei die Flügel (8) flächig ausgebildet sind und jeweils eine Vorder- und Rückseite aufweisen,
wobei die Vorderseite zur flächigen Verklebung mit der Mantelfläche eines Zahnes (1, 2) ausgeformt ist und das Mittelstück die daran anschließenden Flügel fest miteinander verbindet,
wobei das Mittelstück (7) mit den beiden Flügeln (8) eine Aussparung bildet, welche der Form des Zahnfleischrands (4) folgt,
wobei der Retainer hergerichtet ist, an zumindest einem nicht-randständigen Zahn zwei Doppelflügel anzuordnen derart, dass ein erster Doppelflügel eine klebschlüssige Verbindung von einem linksbenachbarten Zahn und ein zweiter Doppelflügel eine klebschlüssige Verbindung von einem rechtsbenachbarten Zahn zu dem nicht-randständigen Zahn herzustellen vermag, und
wobei die Doppelflügel (6) hergerichtet sind, eine klebschlüssige Verbindung von dem links-benachbarten und dem rechts-benachbarten Zahn durch den Körper des jeweiligen Doppelflügels (6) hindurch zu dem nicht-randständigen Zahn bereitzustellen, so dass der nicht-randständige Zahn mittels des Retainers von zwei Doppelflügeln stabilisierbar ist.

2. Retainer nach Anspruch 1, **dadurch gekennzeichnet, dass** die Flügel (8) zu ihren freien Enden hin verbreitert ausgeführt sind.

3. Retainer nach Anspruch 1 oder 2, **dadurch gekennzeichnet, dass** die freien Enden der Flügel (8) voneinander separiert sind.

4. Retainer nach einem der vorhergehenden Ansprüche, **dadurch gekennzeichnet, dass** an der Rückseite der Doppelflügel (6) Mittel vorhanden sind, um eine mehrere Doppelflügel (6) verbindende Spange zu befestigen.

5. Retainer nach einem der vorhergehenden Ansprüche, **dadurch gekennzeichnet, dass** dieser aus einem Metall, insbesondere einer Metalllegierung, einem Kunststoff-Keramik-Komposit oder PEEK hergestellt ist.

6. Retainer nach einem der vorstehenden Ansprüche, **dadurch gekennzeichnet,**
**dass** der Retainer im Bereich der Flügel (8) eine Dicke von 0,75 mm oder weniger, bevorzugt von 0,5 mm oder weniger, weiter bevorzugt von 0,3 mm oder weniger, oder sogar nur von 0,2 mm oder weniger aufweist, und/oder
**dass** der Retainer im Bereich der Flügel (8) eine Mindestdicke von 0,1 mm oder mehr, bevorzugt von 0,15 mm oder mehr, oder auch von 0,25 mm oder mehr bereitstellt.

7. Retainer nach einem der vorstehenden Ansprüche, **dadurch gekennzeichnet,**
**dass** im Bereich des Mittelstücks (7) eine Lambdaförmige Aussparung (13) gebildet ist, und/oder
**dass** vom Retainer sowohl in der lateralen Ansicht als auch in der axialen Ansicht jeweils ein Bogen geformt ist, dessen Zenit vom Mittelstück (7) gebildet wird.

8. Retainer nach einem der vorstehenden Ansprüche, **dadurch gekennzeichnet,**
**dass** das Mittelstück (7) derart ausgeformt ist, dass es in einen Zahnzwischenraum hineinragt, insbesondere keilförmig in den Zahnzwischenraum hineinragt, und/oder
**dass** das Mittelstück (7) eine Dicke von um 1 mm ± 0,3 mm aufweist, bevorzugt von um 0,5 mm ± 0,3 mm.

9. Retainer nach einem der vorstehenden Ansprüche, **dadurch gekennzeichnet, dass** zumindest ein Aufbiss (12) umfasst ist, welcher an einer Zahnflanke anordnenbar ist.

10. Retainer nach dem vorstehenden Anspruch, wobei ein Doppelflügel (6) zumindest einen, vorzugsweise je zwei Aufbisse (12) umfasst, und/oder
wobei der Retainer derart ausgebildet ist, dass für zumindest einen der zu stützenden Zähne (1, 2) zwei Aufbisse vorgesehen sind, welche insbesondere durch einen Spalt (10) getrennt sind.

11. Retainer nach einem der Ansprüche 9 oder 10, wobei der Aufbiss (12) oder die zwei Aufbisse (12) einstückig mit dem Doppelflügel (6) ausgestaltet sind.

12. Retainer nach einem der Ansprüche 9 bis 11, wobei der Aufbiss (12) eine Auflagefläche (12a) umfasst zum Anlegen eines Zahns eines gegenüberliegenden Kiefers.

13. Retainer nach Anspruch 12, wobei die Bisshöhe mittels Gestaltung der Auflagefläche (12a) des Aufbisses (12) eingestellt werden kann.

14. Verfahren zur Herstellung eines Retainers nach einem der vorstehenden Ansprüche, **dadurch gekennzeichnet, dass** ein elektronisches 3D-Bild der intraoralen Kontur der zu stützenden Zähne (1, 2) erzeugt wird, dass aus dem 3D-Bild eine Druck- oder Fräsvorlage für einen 3D-Drucker oder eine 3D-Fräse berechnet wird und dass der Retainer (5) mittels eines 3D-Druckers oder einer 3D-Fräse unter Verwendung der berechneten Druck- oder Fräsvorlage produziert wird.

15. Verfahren nach Anspruch 14, **dadurch gekennzeichnet, dass** die Doppelflügel des Retainers (5) in einem Retainer-Herstellungsprozess als Doppelflügelverbund hergestellt werden und voneinander trennbar ausgeführt sind.

## Claims

1. Retainer for orthodontic treatment, comprising at least two double wings (6),
wherein each double wing (6) consists of a center piece (7) and two wings (8) extending laterally therefrom,
wherein the wings (8) are flat in shape and each has a front and a back side,
wherein the front side is shaped for flat bonding to the lateral surface of a tooth (1, 2) and the center piece firmly connects the adjacent wings to one another,
wherein the center piece (7) together with the two wings (8) forms a recess that follows the shape of the gingival margin (4),
wherein the retainer is configured to position two double wings on at least one non-marginal tooth such that a first double wing is capable of establishing an adhesive bond from a tooth adjacent on the left and a second double wing is capable of establishing an adhesive bond from a tooth adjacent on the right to the non-marginal tooth, and
wherein the double wings (6) are configured to provide an adhesive bond from the tooth adjacent on the left and the tooth adjacent on the right through the body of the respective double wing (6) to the non-marginal tooth, so that the non-marginal tooth can be stabilized by the retainer by means of two double wings.

2. Retainer according to claim 1, **characterized in that** the wings (8) are widened toward their free ends.

3. Retainer according to claim 1 or 2, **characterized in that** the free ends of the wings (8) are separated from one another.

4. Retainer according to any of the preceding claims, **characterized in that** means are provided on the rear side of the double wings (6) for attaching a bracket connecting a plurality of double wings (6).

5. Retainer according to any of the preceding claims, **characterized in that** it is made of a metal, for exxample a metal alloy, a plastic-ceramic composite, or PEEK.

6. Retainer according to any of the preceding claims, characterized
that the retainer has a thickness in the region of the wings (8) of 0.75 mm or less, preferably 0.5 mm or less, more preferably 0.3 mm or less, or even only 0.2 mm or less, and/or
that the retainer provides a minimum thickness of 0.1 mm or more, preferably 0.15 mm or more, or even 0.25 mm or more in the region of the wings (8).

7. Retainer according to any of the preceding claims, **characterized in**
**that** a lambda-shaped recess (13) is formed in the region of the center piece (7), and/or
**that** the retainer forms an arc in both the lateral view and the axial view, the apex of which is formed by the center piece (7).

8. Retainer according to any one of the preceding claims, **characterized in**
**that** the center piece (7) is shaped such that it protrudes into an interdental space, for instance protrudes wedge-shaped into the interdental space, and/or
**that** the center piece (7) has a thickness of approximately 1 mm ±
0.3 mm, preferably of approximately 0.5 mm ± 0.3 mm.

9. Retainer according to any one of the preceding claims, **characterized in that** it comprises at least one bite splint
(12), which can be positioned against a tooth flank.

10. Retainer according to the preceding claim, wherein a double wing (6) comprises at least one, preferably two bite splints (12) each, and/or
wherein the retainer is designed such that two bite splints are provided for at least one of the teeth (1, 2) to be supported, which are separated for example by a gap (10).

11. Retainer according to one of claims 9 or 10, wherein the bite splint (12) or the two bite splints (12) are formed integrally with the double wing (6).

12. Retainer according to any one of claims 9 to 11, wherein the bite splint (12) comprises a contact surface (12a) for contacting a tooth of an opposing jaw.

13. Retainer according to claim 12, wherein the bite height can be adjusted by means of the configuration of the contact surface (12a) of the bite splint (12).

14. Method for manufacturing a retainer according to any one of the preceding claims, **characterized in that** an electronic 3D image of the intraoral contour of the teeth (1, 2) to be supported is generated, that a printing or milling template for a 3D printer or a 3D milling machine is calculated from the 3D image and that the retainer (5) is produced by means of a 3D printer or a 3D milling machine using the calculated printing or milling template.

15. Method according to claim 14, **characterized in that** the double wings of the retainer (5) are manufactured as a double-wing composite in a retainer manufacturing process and are designed to be separable from one another.

## Revendications

1. Appareil de contention destiné à un traitement orthodontique, composé d'au moins deux doubles ailettes (6),
chaque double aile (6) est composée d'une partie centrale (7) et de deux ailes (8) qui s'y raccordent latéralement,
les ailes (8) étant plates et comportant chacune une face avant et une face arrière,
la face avant est conçue pour être collée à plat sur la surface de la couronne d'une dent (1, 2) et la partie centrale reliant solidement entre elles les ailes qui s'y raccordent,
la partie centrale (7) formant avec les deux ailes (8) un évidement qui épouse la forme du rebord gingival (4),
l'appareil de contention étant conçu pour disposer deux ailes doubles sur au moins une dent non marginale, de telle sorte qu'une première aile double puisse établir une liaison par adhérence entre une dent adjacente à gauche et une deuxième aile double puisse établir une liaison par adhérence entre une dent adjacente à droite et la dent non marginale, et
les doubles ailettes (6) étant agencées pour établir une liaison adhésive entre la dent adjacente à gauche et la dent adjacente à droite, à travers le corps de la double ailette (6) respective, vers la dent non marginale, de sorte que la dent non marginale puisse être stabilisée au moyen du appareil de contention à deux doubles ailettes.

2. Appareil de contention selon la revendication 1, **caractérisé en ce que** les ailes (8) sont élargies vers leurs extrémités libres.

3. Appareil de contention selon la revendication 1 ou 2, **caractérisé en ce que** les extrémités libres des ailes (8) sont séparées les unes des autres.

4. Appareil de contention selon l'une des revendications précédentes, **caractérisé en ce que** des moyens sont prévus à l'arrière des ailes doubles (6) pour fixer un fil reliant plusieurs ailes doubles (6).

5. Appareil de contention selon l'une des revendications précédentes, **caractérisé en ce qu'**il est fabriqué à partir d'un métal, en particulier d'un alliage métallique, d'un composite plastique-céramique ou de PEEK.

6. Appareil de contention selon l'une des revendications précédentes, **caractérisé en ce**
**que** l'appareil de contention présente, au niveau des ailes (8), une épaisseur de 0,75 mm ou moins, de préférence de 0,5 mm ou moins, de préférence encore de 0,3 mm ou moins, voire de seulement 0,2 mm ou moins, et/ou
**que** l'appareil de contention présente, au niveau des ailes (8), une épaisseur minimale de 0,1 mm ou plus, de préférence de 0,15 mm ou plus, voire de 0,25 mm ou plus.

7. Appareil de contention selon l'une des revendications précédentes, **caractérisé en ce que** un évidement en forme de lambda (13) est formé dans la zone de la pièce centrale (7), et/ou
que l'appareil de contention forme, tant en vue latérale qu'en vue axiale, un arc dont le sommet est constitué par la pièce centrale (7).

8. Appareil de contention selon l'une des revendications précédentes, **caractérisé en ce**
**que** la pièce centrale (7) est formée de telle sorte qu'elle s'engage dans un espace interdentaire, en particulier en forme de coin dans l'espace interdentaire, et/ou
**que** la pièce centrale (7) présente une épaisseur d'environ 1 mm ± 0,3 mm, de préférence d'environ 0,5 mm ± 0,3 mm.

9. Appareil de contention selon l'une des revendications précédentes, **caractérisé en ce qu'**il comprend au moins un élément d'appui (12) est inclus, lequel peut être disposé sur un flanc de dent.

10. Appareil de contention selon la revendication précédente, dans lequel une double aile (6) comprend au moins un, de préférence deux appuis (12), et/ou
dans lequel l'appareil de contention est conçu de telle sorte que, pour au moins l'une des dents à soutenir (1, 2), deux appuis sont prévus, qui sont notamment séparés par une fente (10).

11. Appareil de contention selon l'une des revendications 9 ou 10, dans lequel la butée (12) ou les deux butées (12) sont réalisées d'un seul tenant avec la double aile (6).

12. Appareil de contention selon l'une des revendications 9 à 11, dans laquelle la surface d'occlusion (12) comprend une surface d'appui (12a) destinée à venir en contact avec une dent d'une mâchoire opposée.

13. Appareil de contention selon la revendication 12, dans lequel la hauteur d'occlusion peut être réglée au moyen de la configuration de la surface d'appui (12a) de la partie occlusale (12).

14. Procédé de fabrication d'un appareil de contention selon l'une des revendications précédentes, **caractérisé en ce qu'**une image électronique en 3D du contour intra-oral des dents à soutenir (1, 2) est générée, **en ce qu'**un modèle d'impression ou de fraisage destiné à une imprimante 3D ou à une fraiseuse 3D est calculé à partir de l'image en 3D et **en ce que** l'appareil de contention (5) est fabriqué à l'aide d'une imprimante 3D ou d'une fraiseuse 3D en utilisant le modèle d'impression ou de fraisage calculé.

15. Procédé selon la revendication 14, **caractérisé en ce que** les deux ailes de l'appareil de contention (5) sont fabriquées dans un processus de fabrication de l'appareil de contention sous la forme d'un ensemble à deux ailes et sont conçues de manière à pouvoir être séparées l'une de l'autre.
